(19) Europäisches Patentamt
European Patent Office
Office européen des brevets

(11) **EP 4 491 676 A1**

(12) **EUROPEAN PATENT APPLICATION**
published in accordance with Art. 153(4) EPC

(43) Date of publication:
**15.01.2025 Bulletin 2025/03**

(21) Application number: **23766575.7**

(22) Date of filing: **22.02.2023**

(51) International Patent Classification (IPC):
***C09D 4/00*** (2006.01)    ***C09D 175/14*** (2006.01)

(52) Cooperative Patent Classification (CPC):
**C09D 4/00; C09D 175/14**

(86) International application number:
**PCT/JP2023/006564**

(87) International publication number:
**WO 2023/171397 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2022 JP 2022037401**

(71) Applicant: **Kansai Paint Co., Ltd.**
**Amagasaki-shi, Hyogo 661-8555 (JP)**

(72) Inventors:
- **KOMURA, Katsuto**
  **Hiratsuka-shi, Kanagawa 254-8562 (JP)**
- **NAKAOKA, Haruka**
  **Hiratsuka-shi, Kanagawa 254-8562 (JP)**

(74) Representative: **Gill Jennings & Every LLP**
**The Broadgate Tower**
**20 Primrose Street**
**London EC2A 2ES (GB)**

(54) **THERMOSETTING COATING MATERIAL COMPOSITION, COATED ARTICLE, AND IN-MOLD COATING METHOD**

(57) The purpose of the present invention is to provide a coating material composition that is suitable for in-mold coating applications, and is capable of forming a coating film particularly having excellent adhesion properties to materials. This thermosetting coating material composition is for a plastic material and contains a urethane (meth)acrylate (A) having 2-4 polymerizable unsaturated groups and an aliphatic structure, a polymerizable unsaturated compound (B) having one polymerizable unsaturated group per molecule, and a polymerization initiator (C), and is characterized in that the polymerizable unsaturated compound (B) contains a polymerizable unsaturated compound (b 1) that (i) has a boiling point equal to or higher than the curing temperature thereof, (ii) has a rate of permeation with respect to a plastic material of at least 1 mass%, and (iii) has a coating liquid turbidity of at most 50 degrees when mixed with the urethane (meth)acrylate (A).

EP 4 491 676 A1

**Description**

FIELD

The present invention relates to a thermosetting coating composition which is suitable for an in-mold coating usage and is capable of forming a coating film excellent especially in an adhesive property to a material, a coated article in which a coating film by the thermosetting coating composition is formed, and an in-mold coating method of forming the coating film by the thermosetting coating composition.

BACKGROUND ART

In recent years, various plastic materials have been used instead of metallic materials for automobile components, etc., and various coatings have been performed for molded members. As a molding/ coating method with reduced process and less impact on the environment, an in-mold coating method has drawn attention in which a coating composition is injected into a gap provided between a surface of a plastic molded body having been molded inside a mold and a mold surface, and thereafter, the coating composition is cured inside the mold so that an integral molded body where a coating is adhered to a surface of a molded product is manufactured. The applicant of the present case has proposed an in-mold coating method which is capable of forming a coating film excellent in adhesive property and finishing property, by using a thermosetting resin composition with a specific composition for an in-mold coating of a molded product with Fiber Reinforced Plastics (FRP), in Patent Literature 1.

On the other hand, normally, blending an acrylic modified polyolefin or a chlorinated polyolefin with an in-mold coating composition in which an adhesive property is ensured with respect to a nonpolarized thermoplastic plastic substrate such as a polyolefin substrate, etc., widely used as a plastic material, has been proposed (for example in Patent Literatures 2, and 3, etc.).

In Patent Literature 4, using a thermosetting coating composition which includes a saturated aliphatic polyester urethane intermediate, a (meth)acrylate which is a saturated aliphatic (meth)acrylate or a saturated cycloaliphatic (meth) acrylate, one type or more of a hydroxyalkyl (meth)acrylate, a polyacrylate ester of an alkylene polyol, one type or more of a vinyl substituted aromatic, and an initiator capable of generating free radicals, to a polyolefin substrate is disclosed.

CITATION LIST

[PATENT LITERATURE]

Patent Literature 1: Japanese Unexamined Patent Application Publication No. 2013-184307
Patent Literature 2: Japanese Unexamined Patent Application Publication No. 2002-249680
Patent Literature 3: Japanese Unexamined Patent Application Publication No. 2003-138165
Patent Literature 4: Japanese Unexamined Patent Application Publication No. 2004-502570

SUMMARY

[TECHNICAL PROBLEM]

The compositions disclosed in Patent Literatures 2 and 3 have a problem that the compatibility between the polyolefin component and other resin components is poor, resulting in a poor long-term storage stability, and therefore, there is a need for a composition which adheres to a polyolefin substrate without having to blend an acrylic modified polyolefin or a chlorinated polyolefin therewith.
Further, there have been cases where the adhesive property is insufficient depending on the materials when the composition disclosed in Patent Literature 4 is applied to an in-mold coating usage.

The object of the present invention is to provide a thermosetting coating composition which is applicable to various plastic materials, capable of forming a coating film with an excellent adhesive property to materials, and is suitable for an in-mold coating usage.

[SOLUTION TO PROBLEM]

As a result of extensive research, the present inventors have found that the above-mentioned object may be achieved by using a specific blending composition, and have thus completed the present invention. The present invention includes the following aspects.

[Aspect 1] A thermosetting coating composition for a plastic material, the coating composition comprising: a urethane (meth)acrylate (A) which has two to four polymerizable unsaturated groups and an aliphatic structure; a polymerizable unsaturated compound (B) which has one polymerizable unsaturated group in one molecule; and a polymerization initiator (C),
wherein the polymerizable unsaturated compound (B) includes a polymerizable unsaturated compound (b 1) which has:

(i) a boiling point equal to or higher than a curing temperature,
(ii) a permeation rate with respect to the plastic material of 1 mass % or more, and
(iii) a coating liquid turbidity of 50 degrees or lower when mixed with the urethane (meth)acrylate (A).

[Aspect 2] The coating composition according to aspect 1, wherein the urethane (meth)acrylate (A) has a weight average molecular weight of 600 to 14,000, and a glass transition temperature within a range of -60 to 70 °C.
[Aspect 3] The coating composition according to aspect 1or 2, wherein the polymerizable unsaturated compound (B) includes the polymerizable unsaturated compound (b 1) with 10 mass % or more.
[Aspect 4] The coating composition according to any one of aspects 1 to 3, wherein a content ratio of the urethane (meth)acrylate (A) and the polymerizable unsaturated compound (B) is a solid content mass ratio of 10/ 90 to 70/ 30.
[Aspect 5] The coating composition according to any one of aspects 1 to 4, further comprising a polymerizable unsaturated compound (D) which has two polymerizable unsaturated groups in one molecule (except the urethane (meth)acrylate (A)).
[Aspect 6] A coated article comprising a coating film formed by the coating composition according to any one of aspects 1 to 5, on a surface of a molded article formed by the plastic material.
[Aspect 7] The coated article according to aspect 6, wherein the plastic material is a polyolefin.
[Aspect 8] An in-mold coating method comprising steps of:

forming a molded article by heating and molding the plastic material inside a mold;
forming a coated molded article by injecting an in-mold coating composition between the molded article and an inner wall of the mold and curing the in-mold coating composition; and
removing the coated molded article from the mold,
wherein the in-mold coating composition is the coating composition according to any one of aspects 1 to 5.

[Aspect 9] A coated article obtained by the in-mold coating method according to aspect 8.

[ADVANTAGEOUS EFFECTS OF INVENTION]

The thermosetting coating composition of the present invention is suitably applicable to an in-mold coating usage, is applicable to various plastic materials, and is especially capable of forming a coating film with an excellent adhesive property to materials.

DESCRIPTION OF EMBODIMENTS

Hereinbelow, embodiments of the present invention are explained.
Incidentally, in the present description, "a (meth)acrylate" means an acrylate and/ or a methacrylate. "A (meth)acrylic acid" means an acrylic acid and/ or a methacrylic acid. Further, "a (meth)acryloyl" means an acryloyl and/ or a methacryloyl. Still further, "a (meth)acrylamide" means an acrylamide and/ or a methacrylamide.
The thermosetting coating composition of the present invention (hereinbelow, which may simply be referred to as "the coating composition") includes a urethane (meth)acrylate (A) which has two to four polymerizable unsaturated groups and an aliphatic structure, a polymerizable unsaturated compound (B) which has one polymerizable unsaturated group in one molecule, and a polymerization initiator (C).
The above-mentioned urethane (meth)acrylate (A) has two to four polymerizable unsaturated groups in one molecule and an aliphatic structure, from the viewpoint of flexibility and weather resistance.
As the above-mentioned polymerizable unsaturated groups, for example, a (meth)acryloyl group, a vinyl group, a propenyl group, a butadienyl group, a styryl group, an ethynyl group, a cinnamoyl group, a maleate group, an acrylamide group, etc., may be mentioned. Among the aforementioned, a (meth)acryloyl group is preferable, and an acryloyl group is more preferable, from the viewpoint of curability.
The above-mentioned aliphatic structure is referred to a structure which does not have aromaticity ($\pi$-electron conjugated

system), and is desirably introduced by using an aliphatic-based diol, an alicyclic-based diol, an aliphatic polyisocyanate, or an alicyclic polyisocyanate, which will be described later.

The above-mentioned urethane (meth)acrylate (A) is preferably a reaction product of a diol (a1), a polyisocyanate compound (a2), and a polymerizable unsaturated compound having a hydroxyl group (a3), and for example, the same may be obtained by reacting only the diol (a1), the polyisocyanate compound (a2), and the polymerizable unsaturated compound having a hydroxyl group (a3), or may be obtained by also reacting a polyol compound (a4) and/ or a chain extending component of a hydroxyl group-containing compound (a5) therewith, as required.

As the diol (a1), for example, a dihydric alcohol such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecane dimethanol, hydroxypivalic acid neopentyl glycol ester, hydrogenated bisphenol A, hydrogenated bisphenol F, and dimethylolpropionic acid, etc.; a polylactone diol obtained by adding a lactone compound such as $\varepsilon$-caprolactone, etc., to the aforementioned dihydric alcohol; an ester diol compound such as bis(hydroxyethyl) terephthalate, etc.; a polyether diol compound such as an alkylene oxide adduct of bisphenol A, polyethylene glycol, polypropylene glycol, and polybutylene glycol, etc.; a polycarbonate diol obtained by a polycondensation reaction of the aforementioned diol with a a carbonylating agent, etc., may be mentioned, and the aforementioned may be used alone or in combination with two types or more.

The polyisocyanate compound (a2) is a compound which has at least two isocyanate groups in one molecule. As the polyisocyanate compound (a2), for example, an aliphatic polyisocyanate, an alicyclic polyisocyanate, an araliphatic polyisocyanate, an aromatic polyisocyanate, and a derivative of the aforementioned polyisocyanate, etc., may be mentioned. The aforementioned may be used alone or in combination with two types or more. In particular, from the viewpoint of the substrate adhesive property, curing degree and weather resistance, etc., of the coating film to be formed, the aliphatic polyisocyanate and the alicyclic polyisocyanate are preferable.

As the above-mentioned aliphatic polyisocyanate, for example, an aliphatic diisocyanate such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and 2,6-diisocyanatohexanoic acid methyl (common name: lysine diisocyanate), etc.; and an aliphatic triisocyanate such as 2,6-diisocyanatohexanoic acid-2-isocyanatoethyl, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane, etc., may be mentioned.

As the above-mentioned alicyclic polyisocyanate, for example, an alicyclic diisocyanate such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexane diisocyanate, methyl-2,6-cyclohexane diisocyanate, 1,3- or 1,4-bis(isocyanatomethyl) cyclohexane (common name: hydrogenated xylylene diisocyanate) or a mixture thereof, methylene bis(1,4-cyclohexanediyl) diisocyanate (common name: hydrogenated MDI), and norbornane diisocyanate, etc.; and an alicyclic triisocyanate such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1) heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5 -(2-isocyanatoethyl)-2-isocyanatomethyl-2-(3 -isocyanatopropyl)-bicyclo(2.2.1)-heptane and 6-(2-isocyanatoethyl)-2-isocyanatomethyl-2-(3-isocyanatopropyl)-bicyclo(2.2.1)heptane, etc., may be mentioned.

As the polymerizable unsaturated compound having a hydroxyl group (a3), for example, 2-hydroxyethyl (meth)acrylate, 2-hydroxypropyl (meth)acrylate, 3-hydroxypropyl (meth)acrylate, 4-hydroxybutyl (meth)acrylate, glycerin di(meth)acrylate, trimethylolpropane di(meth)acrylate, pentaerythritol di(meth)acrylate, pentaerythritol tri(meth)acrylate, dipentaerythritol penta(meth)acrylate, tris(2-hydroxyethyl)isocyanurate di(meth)acrylate, etc., may be mentioned, and the aforementioned may be used alone or in combination with two types or more.

The polyol compound (a4) is a compound which has three or more hydroxyl groups in one molecule, other than the above-mentioned diol (a1) and the polymerizable unsaturated compound having a hydroxyl group (a3), and as the polyol compound (a4), for example, a trihydric or higher alcohol such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol, and mannitol, etc.; a polylactone polyol compound obtained by adding a lactone compound such as $\varepsilon$-caprolactone, etc., to the aforementioned trihydric or higher alcohol; and a fatty acid ester of glycerin, etc., may be mentioned.

As the chain extending component of a hydroxyl group-containing compound (a5), for example, a lactone compound such as $\varepsilon$-caprolactone and $\gamma$-valerolactone, etc.; an alkylene oxide compound such as ethylene oxide and propylene oxide, etc., may be mentioned.

The urethanization reaction to form the above-mentioned urethane (meth)acrylate (A) can usually be carried out in an organic solvent. As the above-mentioned organic solvent, an aromatic hydrocarbon-based solvent such as toluene and xylene, etc., a ketone-based solvent such as acetone, methyl ethyl ketone, methyl isobutyl ketone and cyclohexanone, etc., and an ester-based solvent such as ethyl acetate, propyl acetate, isobutyl acetate and butyl acetate, etc., may be mentioned. The above-mentioned organic solvent may be used alone or as a mixture of two or more types. The reaction temperature of the urethanization reaction is preferably from room temperature to 100 °C., and the reaction time is preferably 1 to 10 hours.

In the above-mentioned urethanization reaction, a catalyst, for example, an organic tin catalyst such as dibutyltin dilaurate, dibutyltin diethylhexoate, dibutyltin sulfite, etc., may be used, as required. The amount of the above-mentioned catalyst is preferably 0.01 to 1.0 parts by mass, more preferably 0.1 to 0.5 parts by mass, with respect to 100 parts by mass of the total amount of the reaction raw materials. In addition, a polymerization inhibitor such as hydroquinone monomethyl ether, etc., may be used in the above-mentioned urethanization reaction. When the above-mentioned polymerization inhibitor is used, the amount added is preferably 0.01 to 1.0 parts by mass with respect to 100 parts by mass of the total amount of the reaction raw materials.

In the above-mentioned urethane reaction, the reaction raw materials can usually be reacted in the following blending amounts with respect to 100 parts by mass of the total amount of all components.

Diol (a1):

5 to 60 parts by mass, preferably 5 to 50 parts by mass
Polyisocyanate compound (a2):
20 to 70 parts by mass, preferably 30 to 60 parts by mass
Polymerizable unsaturated compound having a hydroxyl group (a3):
10 to 80 parts by mass, preferably 20 to 60 parts by mass
Polyol compound (a4):

0 to 60 parts by mass, preferably 0 to 50 parts by mass
Chain extending component of a hydroxyl group-containing compound (a5):
0 to 50 parts by mass, preferably 0 to 30 parts by mass

The urethane (meth)acrylate (A) to be used in the present invention preferably has a weight average molecular weight in the range of 600 to 14,000, and more preferably 1,000 to 4,000, and a glass transition temperature in the range of -60 to 70 °C, and more preferably 0 to 40 °C, from the viewpoint of flexibility.

Incidentally, the measurement of the above-mentioned weight average molecular weight may be performed by using a gel permeation chromatography (GPC) under the following conditions.

- Equipment: HPLC-8220 (manufactured by Tosoh Corporation)
- Column configuration: TSKgel SuperHZ3000 + TSKgel SuperHZ1000 (both manufactured by Tosoh Corporation)
- Detector: Differential refractive index detector (RI detector)
- Eluent: Tetrahydrofuran
- Eluent flow rate: 0.6mL/ min
- Temperature: 40 °C
- Heating rate: Constant temperature without heating
- Calibration: Polystyrene equivalent
- Sample concentration: 0.01g/ 5mL

Further, the above-mentioned glass transition temperature is a static glass transition temperature, and may be measured, for example, by taking a sample in a measurement cup, and vacuum suctioning to completely remove the solvent, followed by measuring the change in heat quantity in the range of -100 °C to 150 °C at a heating rate of 3 °C/ min using a differential scanning calorimeter "DSC - 50Q type" (trade name, manufactured by Shimadzu Corporation), and defining the first change point of the baseline on the low temperature side as the static glass transition temperature.

As the urethane (meth)acrylate (A), a commercially available product may be used, such as "Shikoh UV - 7000B" (manufactured by The Nippon Synthetic Chemical Industry Co.,Ltd.), "EBECRYL8210", "EBECRYL230", "EBECRYL4513", "EBECRYL4666" (all manufactured by Daicel-Allnex Ltd.), and "ETERCURE 6106" (manufactured by Eternal Materials Co., Ltd.), and the aforementioned may be used alone or in combination with two types or more.

The polymerizable unsaturated compound (B) which has one polymerizable unsaturated group in one molecule to be used in the present invention includes, at least as one component thereof, a polymerizable unsaturated compound (b1) which has (i) a boiling point equal to or higher than a curing temperature, (ii) a permeation rate with respect to the plastic material of 1 mass % or more, preferably 1 to 30 mass %, and more preferably 1 to 20 mass %, and (iii) a coating liquid turbidity of 50 degrees or lower, and preferably 10 degrees or lower when mixed with the above-mentioned urethane (meth)acrylate (A).

The coating composition of the present invention is a thermosetting coating composition for a plastic material, and when the polymerizable unsaturated compound (b1) to be used has a boiling point lower than the thermal curing temperature of the coating film to be formed, it is especially difficult for the same to be applied to an in-mold coating usage. Further, in a case where the polymerizable unsaturated compound (b1) has a coating liquid turbidity of more than 50 degrees when mixed with the above-mentioned urethane (meth)acrylate (A), sufficient adhesive property with respect to a plastic material cannot be obtained.

In the present description, the above-mentioned permeation rate (%) is calculated by cutting Kobe Poly Sheet PP (trade name, product number: PP - N - AN, thickness: 1.0 mm, manufactured by Resonac Corporation.) into a size of 30 mm × 30 mm to form a polypropylene sheet, immersing the polypropylene sheet in a liquid of the polymerizable unsaturated compound (b1) at 23 °C for 24 hours, and based on the increase in mass of the polypropylene sheet after immersion with respect to the initial mass of the polypropylene sheet before immersion, shown as follows.

$$\text{(permeation rate)} = [\text{(mass after immersion - initial mass)}/\text{(initial mass)}] \times 100$$

In the present description, the above-mentioned coating liquid turbidity is measured by mixing the urethane (meth)acrylate (A)/ the polymerizable unsaturated compound (b1) in a mass ratio of 30/ 70, leaving the mixture to stand for 5 minutes, and thereafter, using a turbidity meter "Color/ Turbidity Simultaneous Measuring Instrument COH400" (manufactured by Nippon Denshoku Industries Co., Ltd.) under the condition of 23 °C. Incidentally, in a case where the thermosetting coating composition contains a plurality of urethane (meth)acrylates (A), the turbidity is measured by adjusting the total amount of the plurality of urethane (meth)acrylates (A) to 30 in terms of content ratio, and 70 of the polymerizable unsaturated compound (b 1) is mixed therewith.

As the above-mentioned polymerizable unsaturated compound (b 1), one may be used without limitation as long as the same satisfies the above-mentioned condition, and for example, a vinyl aromatic compound and an esterification product of a monohydric alcohol with 4 to 24 carbon atoms and a (meth)acrylic acid, etc., may be mentioned, and the aforementioned may be used alone or in combination with two types or more. Among the aforementioned, styrene, isobutyl (meth)acrylate, cyclohexyl (meth)acrylate, etc., may be preferably used especially from the viewpoint of adhesive property.

The above-mentioned polymerizable unsaturated compound (B) preferably includes the above-mentioned polymerizable unsaturated compound (b 1) with 10 mass % or more, and more preferably with 25 mass % or more, from the viewpoint of adhesive property. In a case where a polymerizable unsaturated compound (b 1) with a high permeation rate is used, the content thereof within the polymerizable unsaturated compound (B) is required less, and in a case where a polymerizable unsaturated compound (b 1) with a low permeation rate is used, it is desirable to ensure the content thereof within the polymerizable unsaturated compound (B) so as to be able to ensure the adhesive property.

In the present invention, the polymerizable unsaturated compound (B) may include a polymerizable unsaturated compound (b2) which has one polymerizable unsaturated group in one molecule, other than the above-mentioned polymerizable unsaturated compound (b 1), within the range where there is no adverse effect on the performance to which the present invention aims.

As the above-mentioned polymerizable unsaturated compound (b2), for example, an esterification product of a monohydric alcohol with 1 to 24 carbon atoms and a (meth)acrylic acid other than the above-mentioned polymerizable unsaturated compound (b 1), a vinyl aromatic compound other than the above-mentioned polymerizable unsaturated compound (b 1), a hydroxyl group-containing (meth)acrylate, a glycidyl group-containing (meth)acrylate, a carboxyl group-containing (meth)acrylate, a nitrogen-containing alkyl (meth)acrylate, a polymerizable amide compound, a hydrolyzable silane compound which has a polymerizable unsaturated group, etc., may be mentioned. The aforementioned may be used alone or in combination with two types or more.

As the esterification product of a monohydric alcohol with 1 to 24 carbon atoms and a (meth)acrylic acid other than the above-mentioned polymerizable unsaturated compound (b 1), for example, n-butyl (meth)acrylate, t-butyl (meth)acrylate, 2-ethylhexyl (meth)acrylate, neopentyl (meth)acrylate, lauryl (meth)acrylate, tetrahydrofurfuryl (meth)acrylate, isobornyl (meth)acrylate, phenyl (meth)acrylate, benzyl (meth)acrylate, 4-t-butylcyclohexyl (meth)acrylate, N-acryloyl oxyethylhexahydrophthalimide, etc., may be mentioned. Further, as the vinyl aromatic compound other than the above-mentioned polymerizable unsaturated compound (b 1), for example, α-methylstyrene, vinyltoluene, α-chlorostyrene, etc., may be mentioned.

As the above-mentioned polymerizable unsaturated compound (b2), especially from the viewpoint of flexibility and weather resistance, 2-ethylhexyl (meth)acrylate, lauryl (meth)acrylate, isobornyl (meth)acrylate, etc., may be preferably used.

In the present invention, it is preferable that the content ratio of the above-mentioned urethane (meth)acrylate (A) and the above-mentioned polymerizable unsaturated compound (B) is adjusted to satisfy (A)/ (B) = 10/ 90 to 70/ 30, and more preferably 20/ 80 to 40/ 60, in terms of solid content mass ratio, from the viewpoint of flexibility and adhesive property of the coating film to be formed.

In the present invention, it is preferable that a thermal polymerization initiator is used as the polymerization initiator (C). Further, as the polymerization initiator (C), a thermal polymerization initiator may be combined with a photopolymerization initiator so as to be used.

The above-mentioned thermal polymerization initiator is a compound which generates free radicals (also in the form of intermediates) upon heating, or a mixture of the same. As the above-mentioned thermal polymerization initiator, for example, an organic peroxide such as benzoyl peroxide, octanoyl peroxide, lauroyl peroxide, stearoyl peroxide, cumene hydroperoxide, tert-butyl peroxide, tert-butyl peroxy laurate, tert-butyl peroxy benzoate, tert-butyl peroxy isopropyl carbonate, tert-butyl peroxy acetate, diisopropylbenzene hydroperoxide, and tert-butyl peroxy-2-ethylhexyl monocarbonate, etc.; an azo compound such as azobisisobutyronitrile, azobis(2,4-dimethylvaleronitrile), azobis(2-methylpropionitrile), azobis(2-methylbutyronitrile), 4,4'-azobis(4-cyanobutanoic acid), dimethylazobis(2-methylpropionate), azobis[2-methyl-N-(2-hydroxyethyl)-propionamide], and azobis{2-methyl-N-[2-(1-hydroxybutyl)]-propionamide}, etc.; and a persulfate such as potassium persulfate, ammonium persulfate, and sodium persulfate, etc., may be mentioned.

As the commercially available product of the above-mentioned thermal polymerization initiator, for example, "VA-044", "VA-046B", "V-50", "VA-057", "VA-061", "VA-067", "VA-086", "V-60", "V-70", "V-65", "V-601", "V-59", "V-40", "VF-096", "VAm-110" (all of which are trade names, manufactured by Wako Pure Chemical Corporation), "Perbutyl H", "Perbutyl Z", "Perbutyl O", "Perbutyl E", and "Perocta O" (all of which are trade names, manufactured by NOF Corporation), etc., may be mentioned.

The above-mentioned polymerization initiator (C) may be used alone or in combination with two types or more.

In the present invention, the content of the polymerization initiator (C) is preferably 0.01 to 10 parts by mass, and more preferably 0.1 to 5 parts by mass, based on the total amount of the solid content of the above-mentioned urethane (meth)acrylate (A), the polymerizable unsaturated compound (B), in addition to the polymerizable unsaturated compound (D) which will be described later as 100 parts by mass.

The coating composition of the present invention may further contain a polymerizable unsaturated compound (D) which has two polymerizable unsaturated groups in one molecule (except the above-mentioned urethane (meth)acrylate (A)), as required.

As the above-mentioned polymerizable unsaturated compound (D), for example, an alkyl modified product and a caprolactone modified product such as dipropylene glycol di(meth)acrylate, triethylene glycol di(meth)acrylate, neopentyl glycol di(meth)acrylate, ethylene oxide modified di(meth)acrylate of bisphenol A, propylene oxide modified di(meth)acrylate of bisphenol A, ethylene oxide modified di(meth)acrylate of bisphenol F, tricyclodecane dimethanol di(meth)acrylate, tricyclodecane diol di(meth)acrylate; pentaerythritol tetra(meth)acrylate, pentaerythritol tri(meth)acrylate, dipentaerythritol hexa(meth)acrylate, dipentaerythritol penta(meth)acrylate, trimethylolethane tri(meth)acrylate, trimethylolpropane tri(meth)acrylate, and ditrimethylolpropane tetra(meth)acrylate, etc., in addition to a polyoxyalkylene modified product, etc., may be mentioned, and the aforementioned may be used alone or in combination with two types or more.

The above-mentioned polymerizable unsaturated compound (D) preferably includes especially an esterification product (d1) of a polyhydric alcohol having an alicyclic skeleton and a (meth)acrylic acid. As the alicyclic skeleton, a cyclohexane ring and a tricyclodecane ring, etc., may be mentioned, and as the esterification product (d1) of a polyhydric alcohol having an alicyclic skeleton and a (meth)acrylic acid, for example, tricyclodecane dimethanol di(meth)acrylate and tricyclodecane diol di(meth)acrylate, etc., may be mentioned.

In a case where the coating composition of the present invention includes the polymerizable unsaturated compound (D), the content thereof is preferably 5 to 35 parts by mass, and more preferably 5 to 25 parts by mass, based on the total amount of the solid content of the above-mentioned urethane (meth)acrylate (A), the above-mentioned polymerizable unsaturated compound (B), and above-mentioned the polymerizable unsaturated compound (D) as 100 parts by mass, from the viewpoint of improving reaction rate and ensuring releasability of the coating film to be formed, etc.

The coating composition of the present invention may further include, in addition to the aforementioned, an ultraviolet absorbing agent and/ or a light stabilizing agent. Further, the coating composition of the present invention may be appropriately contain other additive components commonly used in the coating field, such as a resin component such as chlorinated polyolefin, etc., a crosslinking agent, a solvent (an organic solvent, water), a pigment, a curing accelerator, a polymerization inhibitor, a chain transfer agent, an antioxidant, a surface conditioning agent, a defoaming agent, an emulsifying agent, a surfactant, an antifouling agent, a wetting agent, a thickening agent, a dye, a scratch resistance improving agent, a gloss adjustment agent, etc. Still further, in a case where the coating composition of the present invention is coated by an in-mold coating method, the same preferably contains a releasing agent.

As the above-mentioned ultraviolet absorbing agent, one which has conventionally been known may be used, and for example, a benzotriazole-based absorbing agent, a triazine-based absorbing agent, a salicylic acid derivative-based absorbing agent, a benzophenone-based absorbing agent, etc., may be used. Further, the above-mentioned ultraviolet absorbing agent may have a polymerizable unsaturated group.

As the specific examples of the above-mentioned benzotriazole-based absorbing agent, 2-(2'-hydroxy-5'-methylphenyl)benzotriazole, 2-(2'-hydroxy-5'-t-butylphenyl)benzotriazole, 2-(2'-hydroxy-3 ',5'-di-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amylphenyl)benzotriazole, 2-(2'-hydroxy-4'-octoxyphenyl)benzotriazole, 2-{2'-hydroxy-3'-(3",4",5",6"-tetrahydrophthalimidomethyl)-5'-methylphenyl}benzotriazole, 2-[2-hydroxy-5-[2-(methacryloyloxy) ethyl]phenyl]-2H-benzotriazole, etc., may be mentioned.

As the specific examples of the above-mentioned triazine-based absorbing agent, 2,4-bis(2,4-dimethylphenyl)-6-(2-hydroxy-4-isooctyloxyphenyl)-1,3,5-triazine, 2-[4((2-hydroxy-3-dodecyloxypropyl)-oxy)-2-hydroxyphenyl]-4,6-bis(2,4-dimethylphenyl)-1,3,5-triazine, 2-[4-((2-hydroxy-3-tridecyloxypropyl)-oxy)-2-hydroxyphenyl]-4,6-bis(2,4-dimethylphenyl)-1,3,5-triazine, 2-(2,4-dihydroxyphenyl)-4,6-bis(2,4-dimethylphenyl)-1,3,5-triazine, etc., may be mentioned.

As the specific examples of the above-mentioned salicylic acid derivative-based absorbing agent, phenyl salicylate, p-octylphenyl salicylate, 4-tert-butylphenyl salicylate, etc., may be mentioned.

As the specific examples of the above-mentioned benzophenone-based absorbing agent, 4-dihydroxybenzophenone, 2-hydroxy-4-methoxybenzophenone, 2,2'-dihydroxy-4-methoxybenzophenone, 2-hydroxy-4-methoxy-2'-carboxybenzophenone, 2-hydroxy-4-methoxy-5-sulfobenzophenone trihydrate, 2,2'-dihydroxy-4,4'-dimethoxybenzophenone, 2-hydroxy-4-octoxybenzophenone, 2-hydroxy-4-octadecyloxybenzophenone, sodium 2,2 '-dihydroxy-4,4'-dimethoxy-5-sulfobenzophenone, 2,2',4,4'-tetrahydroxybenzophenone, 4-dodecyloxy-2-hydroxybenzophenone, 5-chloro-2-hydroxybenzophenone, resorcinol monobenzoate, 2,4-dibenzoylresorcinol, 4,6-dibenzoylresorcinol, hydroxydodecylbenzophenone, 2,2'-dihydroxy-4(3-methacryloxy-2-hydroxypropoxy)benzophenone, etc., may be mentioned.

As the commercially available product of the above-mentioned ultraviolet absorbing agent, for example, "Tinuvin 900", "Tinuvin 928", "Tinuvin 384-2", "Tinuvin 479", "Tinuvin 405", "Tinuvin 400" (trade names, manufactured by BASF, Tinuvin is a registered trademark), "RUVA 93" (trade name, manufactured by Otsuka Chemical Co., Ltd.), etc., may be mentioned.

In a case where the coating composition of the present invention contains the above-mentioned ultraviolet absorbing agent, the content of the ultraviolet absorbing agent is preferably within the range of 0.5 to 10 mass %, more preferably 0.8 to 9 mass %, and even more preferably 1.0 to 8 mass %, with respect to the total amount of the solid content of the coating composition.

The above-mentioned light stabilizing agent is used as a radical chain inhibitor which captures active radical species generated during the degradation process of a coating film, and for example, a light stabilizing agent made of a hindered amine compound, etc., may be mentioned.

Among light stabilizing agents, a hindered piperidine compound may be mentioned as the one which shows an excellent light stabilizing effect. As the hindered piperidine compound, for example, a monomeric type such as bis(1,2,2,6,6-pentamethyl-4-piperidyl)sebacate, bis(2,2,6,6-tetramethyl-4-piperidinyl)sebacate, bis(N-methyl-2,2,6,6-tetramethyl-4-piperidinyl)sebacate, 4-benzoyloxy-2,2',6,6'-tetramethylpiperidine, bis(1,2,2,6,6-pentamethyl-4-piperidyl){[3,5-bis(1,1-dimethylethyl)-4-hydroxyphenyl]methyl}butyl malonate, etc.; an oligomeric type such as poly {[6-(1,1,3,3-tetramethylbutyl)imino-1,3,5-triazine-2,4-diyl][(2,2,6,6-tetramethyl-4-piperidyl)imino]hexamethylene [(2,2,6,6-tetramethyl-4-piperidyl)iminol]}, etc.; and a polyester bond type such as a polyester product of 4-hydroxy-2,2,6,6-tetramethyl-1-piperidineethanol and succinic acid, etc., may be mentioned, however, the same is not limited to the aforementioned. Further, as the above-mentioned light stabilizing agent, a known polymerizable light stabilizing agent may also be used.

As the commercially available product of the above-mentioned light stabilizing agent, for example, "Tinuvin 123", "Tinuvin 152", "Tinuvin 292" (trade names, manufactured by BASF, Tinuvin is a registered trademark), "HOSTAVIN 3058" (trade name, manufactured by Clariant AG, Hostavin is a registered trademark), and "ADK STAB LA-82" (trade name, manufactured by ADEKA CORPORATION, ADK STAB/ADKSTAB is a registered trademark),etc., may be mentioned.

In a case where the coating composition of the present invention contains the above-mentioned light stabilizing agent, the content of the light stabilizing agent is preferably within the range of 0.5 to 10 mass %, more preferably 0.8 to 9 mass %, and even more preferably 1.0 to 8 mass %, with respect to the total amount of the solid content of the coating composition.

As the above-mentioned solvent, for example, an organic solvent, water, etc., may be used. As the organic solvent, for example, a ketone-based solvent such as acetone, methyl ethyl ketone, and methyl isobutyl ketone, etc.; an ester-based solvent such as ethyl acetate, butyl acetate, methyl benzoate, ethyl ethoxypropionate, ethyl propionate, and methyl propionate, etc.; an ether-based solvent such as tetrahydrofuran, dioxane, and dimethoxyethane, etc.; a glycol ether-based solvent such as ethylene glycol monomethyl ether, ethylene glycol monoethyl ether, diethylene glycol monomethyl ether, propylene glycol monomethyl ether acetate, and 3-methoxybutyl acetate, etc.; an aromatic-based solvent such as toluene, xylene, and "SWASOL 1000" (trade name, manufactured by Cosmo Oil Co., Ltd., a petroleum-based solvent with a high boiling point), etc.; an aliphatic hydrocarbon-based solvent such as hexane and heptane, etc., may be mentioned.

In a case where the coating composition of the present invention contains the above-mentioned solvent, the content of the solvent is preferably within the range of 0.01 to 10 mass %, more preferably 0.01 to 5 mass %, and even more preferably 0.01 to 5 mass %, with respect to the total amount of the solid content of the coating composition.

As the above-mentioned pigment, for example, a luster pigment, a color pigment, and an extender pigment, etc., may be mentioned. The pigment may be used alone or in combination with two types or more.

As the above-mentioned curing accelerator, for example, a tertiary amine such as diethylenetriamine, triethanolamine, 4-dimethylaminobenzoic acid, and 3-dimethylaminobenzoic acid, a quaternary ammonium salt, and a metal dryer such as cobalt naphthenate, copper naphthenate, barium naphthenate, cobalt octoate, manganese octoate, zinc octoate, and vanadium octoate, etc., may be mentioned. The aforementioned may be used alone or in combination with two types or more.

The above-mentioned chain transfer agent is a compound that has a function of receiving a generated radical and transferring the received radical to another compound. As the chain transfer agent, for example, a mercapto group-containing compound and carbon tetrachloride, etc., may be mentioned. As the chain transfer agent, one which includes a mercapto group-containing compound is preferable.

As the above-mentioned mercapto group-containing compound, a mercapto group-containing compound having an aromatic ring, such as 2-mercaptobenzothiazole, 2-mercaptobenzimidazole, 2-mercaptobenzoxazole, 3-mercapto-1,2,4-triazole, 2-mercapto-4(3H)-quinazoline, $\beta$-mercaptonaphthalene, and 1,4-dimethylmercaptobenzene, etc.; an aliphatic-based mercapto group-containing compound such as hexanedithiol, decanedithiol, butanediol bis(3-mercaptopropionate), butanediol bisthioglycolate, ethylene glycol bis(3-mercaptopropionate), ethylene glycol bisthioglycolate, trimethylolpropane tris(3-mercaptopropionate), trimethylolpropane tristhioglycolate, trishydroxyethyl tristhiopropionate, pentaerythritol tetrakis(3-mercaptopropionate), pentaerythritol tris(3-mercaptopropionate), butanediol bis(3-mercaptobutyrate), ethylene glycol bis(3-mercaptobutyrate), trimethylolpropane tris(3-mercaptobutyrate), pentaerythritol tetrakis(3-mercaptobutyrate), pentaerythritol tris(3-mercaptobutyrate), 1,3,5-tris(3-mercaptobutyloxyethyl)-1,3,5-triazine-2,4,6(1H,3H,5H)-trione, etc., may be mentioned. The aforementioned may be used alone or in combination with two types or more.

In a case where the coating composition of the present invention contains the above-mentioned chain transfer agent, the content of the chain transfer agent is preferably within the range of 0.1 to 5.0 mass %, more preferably 0.2 to 1.0 mass %, and even more preferably 0.3 to 0.9 mass %, with respect to the total amount of the solid content of the coating composition, from the viewpoint of adhesive property.

As the above-mentioned polymerization inhibitor, hydroquinone, hydroquinone monomethyl ether, pyrogallol, tert-butylcatechol, phenothiazine, a hindered phenol-based compound, etc., may be mentioned. The aforementioned may be used alone or in combination with two types or more.

In a case where the coating composition of the present invention contains the above-mentioned polymerization inhibitor, the content of the polymerization inhibitor is preferably within the range of 0.005 to 0.09 mass %, more preferably 0.006 to 0.03 mass %, and even more preferably 0.007 to 0.02 mass %, with respect to the total amount of the solid content of the coating composition, from the viewpoint of weather resistance, etc.

As the above-mentioned releasing agent, for example, a stearic acid, a stearic acid salt such as zinc stearate, aluminum stearate, magnesium stearate, calcium stearate, etc.; a nonionic surfactant such as polyoxyethylene alkyl ether, sorbitan alkyl ester, etc.; a fluorine-based compound such as polytetrafluoroethylene, fluoropolyether, perfluoroalkyl ester, perfluoroalkyl ester salt, etc.; a phosphate compound such as a phosphoric acid monoester and/ or a phosphoric acid diester, etc., having an alkyl chain or an oxyethylene chain, etc.; soybean oil lecithin, silicone oil, fatty acid ester and fatty acid alcohol dibasic acid esters may be mentioned, and the aforementioned may be used alone or in combination with two types or more.

In a case where the coating composition of the present invention contains the above-mentioned releasing agent, the content of the releasing agent is preferably within the range of 0.1 to 10 parts by mass, more preferably 0.2 to 7 parts by mass, and even more preferably 0.3 to 5 parts by mass, based on the solid content in the coating composition as 100 parts by mass, from the viewpoint of the adhesive property between the coating film to be formed and a substrate, releasability from the mold, weather resistance, and the coating film curing degree, etc.

The coating composition of the present invention which may be obtained by the aforementioned is preferably a so-called solventless-type coating composition, and more preferably a heat curable-type coating composition, in which the solid content is preferably 90 to 100 mass %, more preferably 95 to 100 mass %, and even more preferably 99 to 100 mass %. Incidentally, in this description, a solid content is referred to as all components constituting the coating composition except for the solvent.

In the present invention, the coating composition which may be obtained by the aforementioned is applied to a surface of a molded article made of a plastic material to form a wet coating film (uncured coating film), and the wet coating film is cured, whereby the desired coating film may be formed.

As the above-mentioned plastic material, for example, an acrylic resin such as polymethyl methacrylate, etc.; a polyester resin such as polyethylene terephthalate, polyethylene naphthalate, poly-1,4-cyclohexanedimethylene terephthalate, polyethylene-1,2-diphenoxyethane-4,4'-dicarboxylate, and polybutylene terephthalate, etc.; an epoxy resin represented by a commercially available product such as EPIKOAT (trade name: manufactured by Yuka Shell Epoxy Co., Ltd.); a polycarbonate resin, a polyimide resin, a novolac resin, a phenolic resin, an acrylonitrile-butadiene-styrene (ABS) resin, an acrylonitrile-ethylene-styrene (AES) resin, an acrylonitrile-styrene-acrylate (ASA) resin, a vinyl chloride resin, a vinylidene chloride resin, a polyurethane resin, cellulose ester (for example, triacetyl cellulose, diacetyl cellulose, propionyl cellulose, butyryl cellulose, acetylpropionyl cellulose, nitrocellulose), polyamide, polystyrene (for example, syndiotactic polystyrene), polyolefin (for example, polypropylene, polyethylene, polymethylpentene), polysulfone, polyethersulfone, polyarylate, polyetherimide, polyether ketone, and various Fiber Reinforced Plastics (hereinbelow which may be referred to as FRP materials or simply FRP), etc., may be mentioned, and especially, polyolefin is preferable.

The coating composition of the present invention is able to be made to have a relatively low viscosity even in a case where the same has a high solid content, whereby the same is able to be suitably used in coating by an in-mold coating method.

In the present invention, the in-mold coating method includes the steps of heating and molding a plastic material inside a mold, followed by injecting the coating composition of the present invention as the in-mold coating composition between the obtained molded article and the mold inner wall, so as to cure the in-mold coating composition, followed by removing the coated molded article from the mold.

In the present invention, the curing temperature is not particularly limited, however, the same is preferably equal to or higher than a softening temperature of the substrate plastic material from the viewpoint of adhesive property. For example, taking a polyolefin plastic material as an example, in a case of polypropylene, the curing temperature is preferably in a range of 105 to 150 °C, and more preferably in a range of 110 to 140 °C.

EXAMPLES

Hereinbelow, the present invention is described in further detail with reference to examples and comparative examples. It should be noted that the present invention is not limited only to these examples. Incidentally, "parts" and "%" are both based on mass.

[Manufacturing of a coating composition]

[Examples 1 to 15 and Comparative Examples 1 to 7]

In a reaction vessel equipped with a thermometer, a thermostat, and a stirrer, the urethane (meth)acrylate (A), the polymerizable unsaturated compound (B), the polymerizable unsaturated compound (D), an ultraviolet absorbing agent, a light stabilizing agent, a releasing agent, a chain transfer agent, and a polymerization inhibitor were charged so as to obtain the solid content amount as shown in Table 1, and the contents of the reaction vessel were heated to 50 °C while stirring, and then the contents were stirred for 3 hours while maintaining the temperature at 50 °C. Thereafter, the contents of the reaction vessel were cooled down to room temperature, and 3.5 parts (solid content amount) of the polymerization initiator (C) was added to the reaction vessel so as to obtain the solid content amount as shown in Table 1, and the contents of the reaction vessel were mixed uniformly so as to obtain each of the coating compositions (1) to (22) with a solid content of 99.6%.

Incidentally, (Note 1) to (Note 9) in Table 1 are as follows.

(Note 1) "EBECRYL 4513": Trade name, manufactured by Daicel-Allnex Ltd., urethane acrylate with an aliphatic structure, the number of polymerizable unsaturated groups in one molecule is 3, the weight average molecular weight is 3,000, the glass transition temperature is 10 °C

(Note 2) "ETERCURE 6106": Trade name, manufactured by Eternal Materials Co., Ltd., urethane acrylate with an aliphatic structure, the number of polymerizable unsaturated groups in one molecule is 2, the weight average molecular weight is 1,800, the glass transition temperature is 30 °C

(Note 3) "UV 7000B": Trade name, manufactured by The Nippon Synthetic Chemical Industry Co.,Ltd., urethane acrylate with an aliphatic structure, the number of polymerizable unsaturated groups in one molecule is 2 to 3, the weight average molecular weight is 3,500, the glass transition temperature is 52 °C

(Note 4) "EBECRYL 8210": Product name, manufactured by Daicel-Allnex Ltd., urethane acrylate with an aliphatic structure, the number of polymerizable unsaturated groups in one molecule is 4, the weight average molecular weight is 600, the glass transition temperature is 68 °C

(Note 5) "EBECRYL 1290": Product name, manufactured by Daicel-Allnex Ltd., urethane acrylate with an aliphatic structure, the number of polymerizable unsaturated groups in one molecule is 6, the weight average molecular weight is 2,000, the glass transition temperature is 69 °C

(Note 6) "Perbutyl O": Product name, manufactured by NOF Corporation, polymerization initiator, t-butylperoxy-2-ethylhexanoate

(Note 7) "Perbutyl E": Product name, manufactured by NOF Corporation, polymerization initiator, tert-butylperoxy-2-ethylhexyl monocarbonate

(Note 8) "RUVA 93": Product name, manufactured by Otsuka Chemical Co., Ltd., ultraviolet absorbing agent

(Note 9) "Tinuvin 123": Product name, manufactured by BASF, light stabilizing agent

[Table 1-1]

Table 1

| Example No. | | | Examples | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Coating composition No. | | | 1 | 2 | 3 | 4 | 5 | 6 | 7 | 8 | 9 | 10 | 11 |
| Blending composition | Urethane (meth)acrylate (A) | EBECRYL 4513 (Note 1) | 10 | 5 | | | | 20 | | 30 | 30 | 40 | |
| | | ETERCURE 6106 (Note 2) | | | | | | | 20 | | | | 20 |
| | | UV 7000B (Note 3) | | | | 20 | 20 | | | | | | |
| | | EBECRYL 8210 (Note 4) | | | 30 | | | | | | | | |
| | | EBECRYL 1290 (Note 5) | | | | | | | | | | | |
| | Polymerizable unsaturated compound (B) | Styrene | 90 | 45 | 50 | 20 | 20 | 20 | 20 | | | 20 | 40 |
| | | Cyclohexyl methacrylate | | 20 | | | | | | 60 | 50 | 10 | 10 |
| | | Isobutyl methacrylate | | 20 | | | | | | 10 | 15 | | 5 |
| | | Isobornyl methacrylate | | | | 30 | 30 | 30 | 30 | | | 20 | |
| | | 2-Ethylhexyl methacrylate | | | | | | | | | | | |
| | | Lauryl methacrylate | | | | 15 | 15 | 15 | 15 | | | 10 | 20 |
| | | Methyl methacrylate | | | | | | | | | | | |
| | Polymerization initiator (C) | Perbutyl O (Note 6) | 3.5 | 3.5 | 3.5 | 3.5 | 3.5 | 3.5 | 3.5 | 3.5 | 3.5 | 3.5 | 3.5 |
| | | Perbutyl E (Note 7) | | | | | | | | | | | |
| | Polymerizable unsaturated compound (D) | Tricyclodecane dimethanol diacrylate | | | | 15 | 15 | 15 | 15 | | 5 | | |
| | | 1,6-Hexanediol diacrylate | | 10 | 20 | | | | | | | | 5 |
| | Ultraviolet absorbing agent | RUVA 93 (Note 8) | 2 | 2 | 2 | | 2 | 2 | 2 | 2 | 2 | 2 | 2 |
| | Light stabilizing agent | Tinuvin 123 (Note 9) | 2 | 2 | 2 | | 2 | 2 | 2 | 2 | 2 | 2 | 2 |
| | Releasing agent | Zinc stearate | 2 | 2 | 2 | 2 | 2 | 2 | 2 | 2 | 2 | 2 | 2 |
| | Chain transfer agent | Pentaerythritol tetrakis (3-mercaptobutyrate) | | | | | | | | | | | |
| | Polymerization inhibitor | Pyrogallol | | | | | | | | | | | |

(continued)

| Example No. | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Evaluation | Adhesive property | G | G | E | E | E | E | E | E | E | G | G |
| | Flexibility | A | G | A | G | G | E | E | E | G | E | G |
| | Weather resistance | G | G | G | G | E | E | E | G | E | G | G |

[Table 1-2]

| Table 1 (Continuation) | | | | | | | | | | | | | | |
|---|---|---|---|---|---|---|---|---|---|---|---|---|---|---|
| Example No. | | | Examples | | | | Comparative Examples | | | | | | | |
| | | | 12 | 13 | 14 | 15 | 1 | 2 | 3 | 4 | 5 | 6 | 7 | |
| Coating composition No. | | | 12 | 13 | 14 | 15 | 16 | 17 | 18 | 19 | 20 | 21 | 22 | |
| Blending composition | Urethane (meth)acrylate (A) | EBECRYL 4513 (Note 1) | 71 | | | | | 30 | 30 | 30 | 30 | 30 | 30 | 30 |
| | | ETERCURE 6106 (Note 2) | | 20 | 20 | 20 | | | | | | | | |
| | | UV 7000B (Note 3) | | | | | | | | | | | | |
| | | EBECRYL 8210 (Note 4) | | | | | | | | | | | | |
| | | EBECRYL 1290 (Note 5) | | | | | 30 | | | | | | | |
| | Polymerizable unsaturated compound (B) | Styrene | 29 | 20 | 20 | 20 | 70 | | | | | | | |
| | | Cyclohexyl methacrylate | | | | | | | | | | | | |
| | | Isobutyl methacrylate | | | | | | | | | | | | |
| | | Isobornyl methacrylate | | 30 | 30 | 30 | | | | | | | | |
| | | 2-Ethylhexyl methacrylate | | | | | | | 70 | | | | | |
| | | Lauryl methacrylate | | 15 | 15 | 15 | | | | 70 | | | | |
| | | Methyl methacrylate | | | | | | | | | 70 | 70 | 70 | 70 |
| | Polymerization initiator (C) | Perbutyl O (Note 6) | 3.5 | 3.5 | | | 3.5 | 3.5 | 3.5 | 3.5 | 3.5 | | | |
| | | Perbutyl E (Note 7) | | | 3.5 | 3.5 | | | | | | | 3.5 | 3.5 |
| | Polymerizable unsaturated compound (D) | Tricyclodecane dimethanol diacrylate | | 15 | 15 | 15 | | | | | | | | |
| | | 1,6-Hexanediol diacrylate | | | | | | | | | | | | |
| | Ultraviolet absorbing agent | RUVA 93 (Note 8) | 2 | 2 | 2 | 2 | 2 | 2 | 2 | 2 | 2 | 2 | 2 |
| | Light stabilizing agent | Tinuvin 123 (Note 9) | 2 | 2 | 2 | 2 | 2 | 2 | 2 | 2 | 2 | 2 | 2 |
| | Releasing agent | Zinc stearate | 2 | 2 | 2 | 2 | 2 | 2 | 2 | 2 | 2 | 2 | 2 |
| | Chain transfer agent | Pentaerythritol tetrakis (3-mercaptobutyrate) | | 0.5 | | 0.5 | | | | | 0.5 | | 0.5 |
| | Polymerization inhibitor | Pyrogallol | | 0.01 | | 0.01 | | | | | 0.01 | | 0.01 |

EP 4 491 676 A1

14

(continued)

| Table 1 (Continuation) | | | | Examples | | | | Comparative Examples | | | | | | |
|---|---|---|---|---|---|---|---|---|---|---|---|---|---|---|
| Example No. | | | | 12 | 13 | 14 | 15 | 1 | 2 | 3 | 4 | 5 | 6 | 7 |
| Coating composition No. | | | | 12 | 13 | 14 | 15 | 16 | 17 | 18 | 19 | 20 | 21 | 22 |
| Evaluation | Adhesive property | | | G | E | E | E | P | P | P | P | P | P | P |
| | Flexibility | | | E | E | E | E | P | P | P | P | P | P | P |
| | Weather resistance | | | G | E | E | E | P | P | P | P | P | P | P |

Further, the boiling point, the permeation rate and the coating liquid turbidity of the polymerizable unsaturated compound (B) in Table 1 are shown in Table 2. Incidentally, the coating liquid turbidity was measured for each urethane (meth)acrylate (A) to be used, and since there was hardly any difference, the average value thereof is shown.

[Table 2]

Table 2

| Polymerizable unsaturated compound (B) | Boiling point (°C) | Permeation rate (%) | Coating liquid turbidity |
|---|---|---|---|
| Styrene | 145 | 11.4 | 1.6 |
| Cyclohexyl methacrylate | 168 | 1.5 | 0 |
| Isobutyl methacrylate | 155 | 1.9 | 1.3 |
| Isobornyl methacrylate | >250 | 0.7 | 91 |
| 2-Ethylhexyl methacrylate | 213 | 1.0 | 91.4 |
| Lauryl methacrylate | 142 | 0.8 | 93.1 |
| Methyl methacrylate | 101 | 3.2 | 1.6 |

[Preparation of test plate]

The surface of a polypropylene plate with the size of 100 mm × 150 mm × 3.0 mm was degreased with isopropyl alcohol, and the coating composition obtained in the examples or comparative examples was applied to the plate using a bar coater so that the curing film thickness was 50 μm, whereby an uncured coating film was formed, and the uncured coating film was then set at room temperature for 1 minute. Subsequently, "NAK80" (trade name: a metal plate manufactured by Daido Steel Co., Ltd.) with the size of 200 mm × 200 mm × 50 mm which had been preheated to 130 °C was pressed against the uncured coating film and fixed to the polypropylene plate with a pressure of 200 kg/ cm$^2$. Subsequently, the metal plate was held at 130 °C for 3 minutes to cure the uncured coating film, and the metal plate was then removed, whereby the test plate was prepared.
Each test plate was subjected to the following evaluation tests. The results are shown in Table 1.

[Evaluation test method]

[Adhesive property]

On the coated surface of each test plate, 100 pieces of grid patterns each with a size of 2 mm × 2 mm were created in accordance with JIS K 5600 - 5 - 6 (1990), adhesive tape was applied to the surface, and the remaining state of the grid pattern coating film after the adhesive tape was very quickly peeled off was examined, whereby the adhesive property was evaluated in accordance with the following criteria. "E" (abbreviation for Excellent), "G" (abbreviation for Good), and "P" (abbreviation for Poor) have the following meanings, with "E" and "G" as being acceptable.

E: Number of remaining pieces/ the total number = 100 pieces/100 pieces, with no chipped edges
G: Number of remaining pieces/ the total number = 100 pieces/100 pieces, with chipped edges
P: Number of remaining pieces/ the total number = 0 to 99 pieces/100 pieces

[Flexibility]

In accordance with JIS K 5600 - 5 - 1 (1999), each test plate was attached to a mandrel bending tester (type 2/ 20 mm diameter) with the coated surface facing outward and was bent 90 ° in 1 to 2 seconds, whereby the flexibility was evaluated. "E" (abbreviation for Excellent), "G" (abbreviation for Good), "A" (abbreviation for Average), and "P" (abbreviation for Poor) have the following meanings, with "E", "G", and "A" as being acceptable.

E: No cracks
G: Cracks present at a position within 3 mm from bending portion both ends
A: Cracks present at a position more than 3 mm and within 5 mm from bending portion both ends

P: Cracks present at a position more than 5 mm from bending portion both ends

[Weather resistance]

Accelerated weather resistance tests were conducted for each test plate in accordance with JIS K 5600 - 7 - 7 (2008) using a "Super Xenon Weather Meter" (weather resistance tester manufactured by Suga Test Instruments Co., Ltd.) under the following conditions: test piece wetting cycle: 18 minutes/ 2 hours, black panel temperature: 61 to 65 °C. Subsequently, at the point where the lamp irradiation time reached 2,000 hours, 100 pieces of grid patterns each with a size of 2 mm × 2 mm were created on the coated surface in accordance with JIS K 5600 - 5 - 6 (1990), adhesive tape was applied to the surface, and the remaining state of the grid pattern coating film after the adhesive tape was very quickly peeled off was examined, whereby the interlayer adhesive property was evaluated in accordance with the following criteria. "E" (abbreviation for Excellent), "G" (abbreviation for Good), and "P" (abbreviation for Poor) have the following meanings, with "E" and "G" as being acceptable.

E: 100 pieces of grid pattern coating film remained
G: 98 to 99 pieces of grid pattern coating film remained
P: 97 or less pieces of grid pattern coating film remained

**Claims**

1. A thermosetting coating composition for a plastic material, the coating composition comprising: a urethane (meth) acrylate (A) which has two to four polymerizable unsaturated groups and an aliphatic structure; a polymerizable unsaturated compound (B) which has one polymerizable unsaturated group in one molecule; and a polymerization initiator (C),
   wherein the polymerizable unsaturated compound (B) includes a polymerizable unsaturated compound (b 1) which has:

   (i) a boiling point equal to or higher than a curing temperature,
   (ii) a permeation rate with respect to the plastic material of 1 mass % or more, and
   (iii) a coating liquid turbidity of 50 degrees or lower when mixed with the urethane (meth)acrylate (A).

2. The coating composition according to claim 1, wherein the urethane (meth)acrylate (A) has a weight average molecular weight of 600 to 14,000, and a glass transition temperature within a range of -60 to 70 °C.

3. The coating composition according to claim 1or 2, wherein the polymerizable unsaturated compound (B) includes the polymerizable unsaturated compound (b 1) with 10 mass % or more.

4. The coating composition according to any one of claims 1 to 3, wherein a content ratio of the urethane (meth)acrylate (A) and the polymerizable unsaturated compound (B) is a solid content mass ratio of 10/ 90 to 70/ 30.

5. The coating composition according to any one of claims 1 to 4, further comprising a polymerizable unsaturated compound (D) which has two polymerizable unsaturated groups in one molecule (except the urethane (meth)acrylate (A)).

6. A coated article comprising a coating film formed by the coating composition according to any one of claims 1 to 5, on a surface of a molded article formed by the plastic material.

7. The coated article according to claim 6, wherein the plastic material is a polyolefin.

8. An in-mold coating method comprising steps of:

   forming a molded article by heating and molding the plastic material inside a mold;
   forming a coated molded article by injecting an in-mold coating composition between the molded article and an inner wall of the mold and curing the in-mold coating composition; and
   removing the coated molded article from the mold,
   wherein the in-mold coating composition is the coating composition according to any one of claims 1 to 5.

**9.** A coated article obtained by the in-mold coating method according to claim 8.

## INTERNATIONAL SEARCH REPORT

| International application No. |
|---|
| **PCT/JP2023/006564** |

**A. CLASSIFICATION OF SUBJECT MATTER**

***C09D 4/00***(2006.01)i; ***C09D 175/14***(2006.01)i
FI:   C09D175/14; C09D4/00

According to International Patent Classification (IPC) or to both national classification and IPC

**B. FIELDS SEARCHED**

Minimum documentation searched (classification system followed by classification symbols)
C09D4/00; C09D175/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/175664 A1 (KANSAI PAINT CO., LTD.) 03 September 2020 (2020-09-03) entire text, all drawings | 1-9 |
| A | JP 2020-26466 A (TOYO INK SC HOLDINGS CO., LTD.) 20 February 2020 (2020-02-20) entire text, all drawings | 1-9 |
| A | JP 2008-69307 A (DH-MATERIALS CO., LTD.) 27 March 2008 (2008-03-27) entire text, all drawings | 1-9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 491 676 A1**

## INTERNATIONAL SEARCH REPORT
### Information on patent family members

| International application No. |
| --- |
| **PCT/JP2023/006564** |

| Patent document cited in search report | | | Publication date (day/month/year) | Patent family member(s) | | | Publication date (day/month/year) |
| --- | --- | --- | --- | --- | --- | --- | --- |
| WO | 2020/175664 | A1 | 03 September 2020 | US 2022/0119668 A1<br>entire text, all drawings<br>EP 3933002 A1<br>CN 113518807 A | | | |
| JP | 2020-26466 | A | 20 February 2020 | (Family: none) | | | |
| JP | 2008-69307 | A | 27 March 2008 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013184307 A
- JP 2002249680 A
- JP 2003138165 A
- JP 2004502570 A